(19) Europäisches Patentamt / European Patent Office / Office européen des brevets

(11) **EP 2 964 968 B1**

(12) **EUROPEAN PATENT SPECIFICATION**

(45) Date of publication and mention
of the grant of the patent:
**19.02.2020 Bulletin 2020/08**

(51) Int Cl.:
*F16C 23/04* (2006.01)     *F16C 7/02* (2006.01)
*F16C 35/00* (2006.01)     *F16C 35/02* (2006.01)
*F16C 9/04* (2006.01)

(21) Application number: **14712965.4**

(22) Date of filing: **06.03.2014**

(86) International application number:
**PCT/US2014/021447**

(87) International publication number:
**WO 2014/138503 (12.09.2014 Gazette 2014/37)**

(54) **LINKAGE APPARATUS HAVING A LOW PROFILE ASYMMETRICAL HEAD**

GESTÄNGEVORRICHTUNG MIT FLACHEM ASYMMETRISCHEM KOPF

APPAREIL DE COUPLAGE AVEC UNE TÊTE ASYMÉTRIQUE À FAIBLE ENCOMBREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2013 US 201361773273 P
06.03.2013 US 201361773511 P**

(43) Date of publication of application:
**13.01.2016 Bulletin 2016/02**

(73) Proprietors:
• **Roller Bearing Company of America, Inc.**
**Oxford, CT 06478 (US)**
• **Giegel, Stephanie**
**Streetsboro, Ohio 44241 (US)**
• **Gaumer, Brian**
**Trabuco Canyon, California 92679 (US)**
• **McNeil, Scott**
**Gilford, New Hampshire 03249 (US)**

(72) Inventors:
• GIEGEL, Stephanie
Hawthorne,
CA 90250 (US)
• GAUMER, Brian
Trabuco Canyon, California 92679 (US)
• MCNEIL, Scott
Gilford, New Hampshire 03249 (US)

(74) Representative: **Bjerkéns Patentbyrå KB
(Stockholm)
Box 5366
102 49 Stockholm (SE)**

(56) References cited:
WO-A1-2013/086185     DE-U1-202010 012 253
FR-A1- 2 878 588     FR-A1- 2 923 460
US-A- 3 256 007     US-A- 5 061 110
US-A- 5 178 482     US-A1- 2004 107 794
US-A1- 2011 142 532

EP 2 964 968 B1

**Description**

Technical Field

The present invention is directed to a linkage apparatus having a low profile asymmetrical head, more particularly, to a linkage apparatus having a low profile asymmetrical head with a swaged self-lubricating bearing disposed in the head, the linkage apparatus for use in short shanked clevis joints and in high-cycle, short range-of-motion linkages for gas turbine engines.

Background

Linkages are used in many applications to move or actuate components in a predetermined manner. In the aircraft industry, linkages are used to move or actuate various components of gas turbine engines. For example, a linkage can be pivotally coupled to a structural member of a turbofan engine fan bleed system. In addition, linkages can be used in variable bypass vane ("VBV") actuator assemblies for the control of bleed and/or bypass air in a VBV actuator system for a turbofan engine.

Typically, the linkages include a bearing, such as a spherical bearing disposed in a head portion of the linkage. The head portion is configured to pivotally engage a receiving member, such as a clevis. In some instances, the clevis has short shanked flanges or uprights which limit the size of the head of the linkage that can be received in the clevis. If the flanges or uprights of a clevis extending outward from a base are too short, a shaft engaged in the bearing will not properly engage a bore defined in the clevis flanges. Often, a linkage apparatus will be modified by machining or milling a flat in an arcuate outer surface of the head. Such a configuration reduces the thickness of the head so that the modified head properly engages the clevis. However, this configuration requires an additional fabrication process, creates local stress concentrations and reduces the load carrying capability of the linkage.

US 3,256,007 discloses a linkage apparatus comprising a pivot member having a head portion configured to receive a bearing assembly. The head portion defines a bore having a substantially cylindrical inner surface that defines an inner diameter having a first center point. The head portion defines an arcuate outer surface which has a portion with a radius of curvature and a second center point. A stem has a central axis and extending from the pivot member along the central axis in a first direction through the portion of the arcuate outer surface.

FR 2878588 discloses a cap having outer convex and inner concave surfaces, and a fixation element at each end of the cap. The terminal is connected to the outer surface by a connecting zone. The zone has a portion delimited by two junction points between the zone and the convex surface. The portion that corresponds to a high constraint zone has a large radius of curvature and a center situated outside the cap.

FR 2923460 discloses a device having a clevis comprising two lugs and being integrated with a hood of a turbine engine. A suspension axle is fixed on the clevis, and supports the suspension unit e.g. tie rod, by a ring. The ring is assembled on the axle, and a ring locking unit axially locks the ring on the lug of the clevis.

Summary

In one aspect, the present invention resides in a linkage apparatus for actuation of a positioning device according to claims 1

In another aspect, the present invention resides in a linkage apparatus for actuation of a positioning device according to claim 9.

One embodiment of a the linkage apparatus for actuation of a positioning device according to the present invention includes a bearing assembly having an inner member and an outer member positioned at least partially around the inner member. The inner member defines an outer engagement surface and a bore extending at least partway therethrough. The outer member defines an inner engagement surface contoured to a shape complementary to the outer engagement surface of the inner member. A self-lubricating liner is disposed between the inner engagement surface of the outer member and the outer engagement surface of the inner member. In one embodiment, the self-lubricating liner is fabricated from a polytetrafluoroethylene ("PTFE") bonded with a thermoset resin. In one embodiment, the self-lubricating liner is fabricated from a perfluorooctanoic acid ("PFOA") PTFE bonded with a polyimide resin system. In one embodiment, the self-lubricating liner is fabricated from a combination of PTFE and PFOA.

Brief Description of the Drawings

FIG. 1A is a side cross-sectional view of one embodiment of a bearing of the present invention.

FIG. 1B is a side cross-sectional view of another embodiment of a bearing of the present invention.

FIG. 1C provides a depiction of an oscillatory rotational range-of-motion of the bearing of FIG. 1A or FIG. 1B.

FIG. 1D provides a depiction of misalignment of the bearing of FIG. 1A or FIG. 1B.

FIG. 2 is a side cross-sectional view of a linkage apparatus of the present invention into which the bearing of FIG. 1A or FIG. 1B is mounted.

FIG. 3A is an exploded perspective view of one embodiment of mounting the linkage apparatus of FIG. 2 to a structural member.

FIG. 3B is an exploded perspective view of another embodiment of mounting the linkage apparatus of FIG. 2 to a structural member.

FIGS. 3C, 3D and 3E are exploded sectional views of the linkage apparatus of FIG. 3B.

FIG. 4 is a side cross-sectional view of one embodiment of the linkage apparatus of FIG. 2 into which the bearing of FIG. 1A or FIG. 1B is mounted into a first end and a second end of the linkage apparatus.

FIG. 5 is a side cross-sectional view of another embodiment of the linkage apparatus of FIG. 2 comprising an actuator.

FIG. 6 is a perspective view of one embodiment of a positioning member of the present invention, namely, a turbofan engine variable bypass vane actuator assembly, which is engaged by the linkage apparatus of FIG. 2.

FIG. 7A is a side view of another embodiment of the linkage apparatus of FIG. 2.

FIG. 7B is another side view of a portion of the linkage apparatus of FIG. 7A showing portions of an arcuate outer surface of a head portion of the linkage apparatus.

FIG. 7C is a cross sectional view of a portion of the linkage apparatus of FIG. 7B taken across line C-C.

FIG. 8 is an isometric view of a section of the linkage apparatus of FIG. 7A taken along line A-A of FIG. 7A and provides the results of a stress analysis of the linkage apparatus.

FIG. 9 is an isometric view of a portion of the section of the linkage apparatus of FIG. 8 and provides additional results of the stress analysis of the linkage apparatus.

FIG. 10 is another isometric view of the portion of the section of the linkage apparatus of FIG. 8 and provides a plot of the stresses exhibited at certain locations of the linkage apparatus.

FIG. 11A is a front view of one embodiment of the linkage apparatus of FIG. 2 having a load slot bearing assembly mounted therein.

FIGS. 11B and 11C are isometric views of the linkage apparatus of FIG. 11A.

Detailed Description

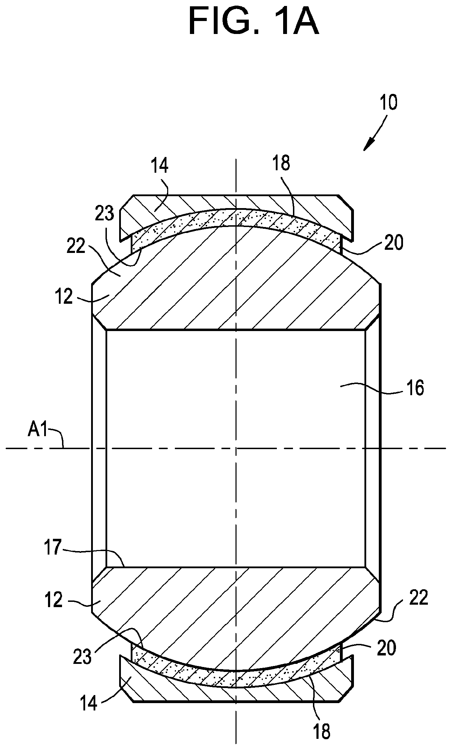

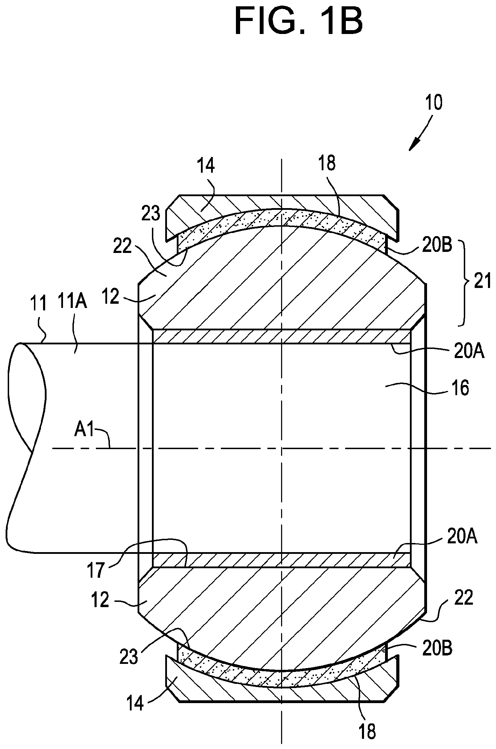

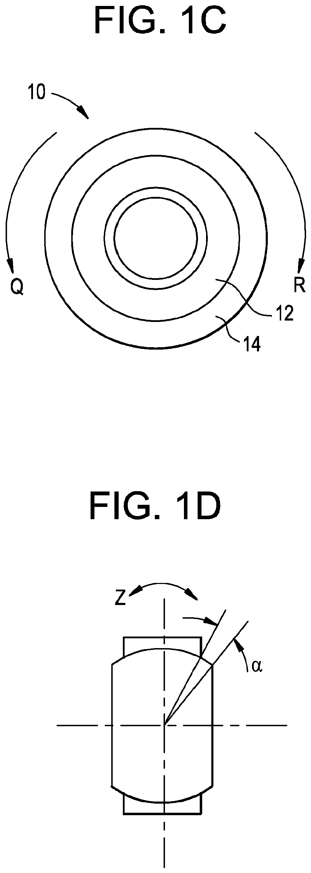

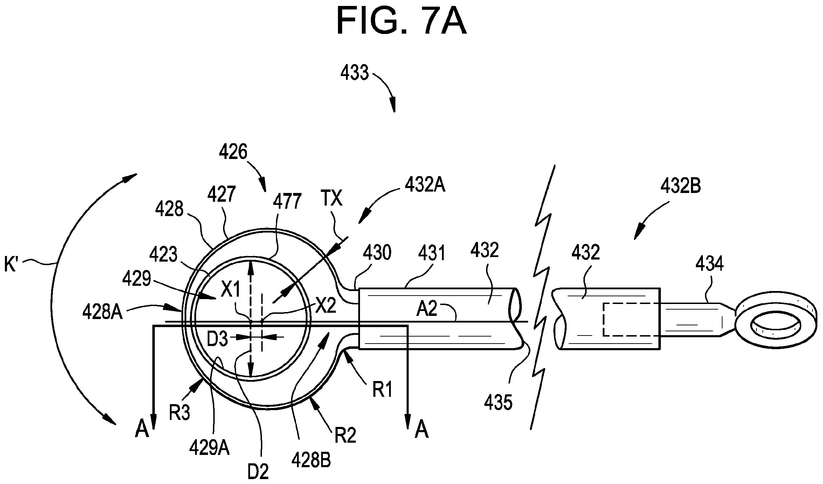

As shown in FIGS. 1-10, one embodiment of a linkage apparatus is provided for actuation of a positioning device of a turbofan engine fan bleed air system, and in particular for actuation of a variable bypass vane actuator assembly. The linkage apparatus supports a static radial load of up to about 20,000 lbs and preferably is fabricated from a martensitic precipitation/age-hardening stainless steel alloy. As described herein with reference to FIGS. 7A-7C, a linkage apparatus 433 includes a positioning member 432 having a low profile head portion 428 configured to receive a bearing assembly therein, a stem 430, and a coupling member 434 defined for coupling the positioning member 432 to a structural member.

As shown in FIGS. 1A and 1B, a spherical plain bearing assembly is designated generally by the reference number 10 and is hereinafter referred to as "bearing assembly 10." The bearing assembly 10 includes an inner member or a ball 12 positioned in an outer member or an outer race 14. A central axis "Al" is defined through the bearing assembly 10. The ball 12 defines an outer surface 22, a portion of which is an outer engagement surface 23. The ball 12 further defines a bore 16 extending therethrough and adapted to receive a portion of a shaft or other component therein. The bore 16 defines an inner surface 17 of the ball 12. The present invention is not so limited, as the ball 12 may be integral with or form part of a shaft or other component, or the ball 12 may define a split-ball configuration. In addition, the outer race 14 may define a load slot or may be integral with or form part of a housing or other component. Moreover, while the bore 16 is shown and described as extending through the ball 12, the present invention is not limited in this regard as the bore can extend partway through the ball, the bore may define a stepped-bore, or the ball may not define a bore, without departing from the broader aspects of the invention.

In the illustrated embodiment, the outer race 14 is a ring having an inner surface, a portion of which is an inner engagement surface 18 on which a self-lubricating liner 20 is disposed. The liner 20 slidingly engages the outer engagement surface 23 of the ball 12. The inner engagement surface 18 is contoured to a shape complementary to the outer engagement surface 23 of the ball 12. As shown, at least a portion of the inner engagement surface 18 is concave, and at least a portion of the outer surface 23 of the ball 12 is convex. When the ball 12 is located in the outer race 14, the outer surface 22 slidingly engages the liner 20. While the outer race 14 has been shown and described as being a ring, the present invention is not limited in this regard as the outer race can assume any practical shape or be integrally formed as part of another component, such as, for example, a housing, without departing from the broader aspects of the invention. Although the liner 20 is shown and described as being disposed on the inner engagement surface 18 of the outer race 14, the present invention is not limited in this regard as the liner 20 may be disposed on the outer engagement surface 23 of the ball 12 and slidingly engage the inner engagement surface 18 of the outer race 14.

As shown in FIG. 1B, one embodiment of the bearing assembly 10 includes a dual liner system 21. A first or primary liner 20A is disposed on the inner surface 17 of the ball 12. A second or secondary liner 20B is disposed on the inner engagement surface 18 of the outer race 14. The primary liner 20A engages an outer surface 11A of a shaft 11 that extends at least partially into the bore 16 of the ball 12. When the shaft 11 is located in the ball 12, the outer surface 11A slidingly engages the liner 20A. When the ball 12 is located in the outer race 14, the outer surface 22 slidingly engages the liner 20B. Accordingly, a primary low-friction interface is provided by the primary liner 20A to accommodate rotation of the shaft 11 with respect to the bearing assembly 10, and in particular, the outer race 14. As a backup or redundant provision, a secondary low-friction interface is provided by the secondary liner 20B to accommodate rotation of the shaft 11 with respect to the bearing assembly 10, and in particular, the outer race 14. Accordingly, should the primary low-friction interface provided by the primary liner 20A seize, the secondary low-friction interface provided by the secondary liner 20B will bear the moment loading movement.

While the primary liner 20A is shown and described as being disposed on the inner surface 17 of the ball 12, the present invention is not limited in this regard as the primary liner 20A may be disposed on the outer surface 11A of the shaft 11 and slidingly engage the inner surface 17 of the ball 12. While the secondary liner 20B is shown and described as being disposed on the inner engagement surface 18 of the outer race 14, the present invention is not limited in this regard as the secondary liner 20B may be disposed on the outer engagement surface 23 of the ball 12 and slidingly engage the inner engagement surface 18 of the outer race 14. While the primary liner 20A is shown and described as being disposed on the inner surface 17 of the ball 12 while the secondary liner is shown and described as being disposed on the inner engagement surface 18 of the outer race 14, the present invention is not limited in this regard as the primary liner 20A may be disposed on one of the inner surface 17 of the ball 12 or the outer surface 11A of the shaft 11, and no liner may be disposed between the outer race 14 and the ball 12.

The ball 12 is made from any suitable material, such as metal or alloys. Suitable metals and alloys from which the ball 12 may be fabricated include, but are not limited to, stainless steels (e.g., 440C, A286, and the like), nickel-chromium-based superalloys (e.g., Inconel and the like), titanium, titanium alloys, silicon nitride, silicon carbide, zirconium, and the like.

The outer race 14 is made from any suitable material, such as metal or alloys. Suitable metals from which the outer race 14 may be fabricated include, but are not limited to, stainless steels (e.g., 17-4 PH® stainless steel), titanium, titanium alloys, and the like. The present invention is not so limited, however, as ceramics may be used in the construction of the outer race 14.

In one embodiment, the self-lubricating liner 20, 20A, 20B comprises a high-temperature self-lubricating liner system. One embodiment of the self-lubricating liner 20, 20A, 20B comprises a polytetrafluoroethylene ("PTFE"). One embodiment of the self-lubricating liner 20, 20A, 20B comprises PTFE bonded or impregnated with a thermoset resin. Another embodiment of the self-lubricating liner 20, 20A, 20B comprises perfluorooctanoic acid ("PFOA") PTFE, such as Teflon®, bonded with a polyimide resin system. The present invention is not limited to the use of a polyimide resin, however, as other thermoset resins including, but not limited to, phenolic and amino resins and polyamides, are within the scope of the present invention. One embodiment of the self-lubricating liner 20, 20A, 20B comprises a PFOA -Free Teflon® liner. For example, the self-lubricating liner 20, 20A, 20B is a Teflon® liner containing no PFOA or substantially no PFOA. Another embodiment of the self-lubricating liner 20, 20A, 20B comprises a Teflon® liner containing PFOA. One embodiment of the self-lubricating liner 20, 20A, 20B comprises PTFE and a phenolic resin reinforced with fibers. For example, one embodiment of the self-lubricating liner 20, 20A, 20B comprises PTFE and a layer of low-friction material, namely, a phenolic resin reinforced with aramid fibers, such as, for example, Nomex®. The fiber may comprise a plain, twill or satin weave. The present invention is not limited to the use of aramid fibers, however, as other fibers including, but not limited to, glass, polyester, glass woven with Teflon®, and carbon fibers are within the scope of the present invention. The use of PTFE and a thermoset resin reinforced provides for toughness, high wear resistance, and protection against dynamic, high frequency vibratory loads. (Nomex® and Teflon® are registered trademarks of E. I. du Pont de Nemours and Company, Wilmington, Delaware).

In one embodiment, the self-lubricating liner 20, 20A, 20B comprises a solid film lubricant such as molybdenum disulfide, graphite, or tungsten disulfide. In another embodiment, the self-lubricating liner 20, 20A, 20B comprises a metallic or semi-metallic coating or plating with antigalling or anti-fretting properties, such as, for example, silver plating, electroless nickel-Teflon® plating, or thermal spray coatings including high velocity oxygen fuel ("HVOF") sprayed coatings or plasma sprayed coatings.

The liner 20, 20A, 20B is suited for use in moderate to high temperature environments and is particularly suited for use in turbofan engines. The thermoset resin used to formulate the liner 20, 20A, 20B selectively is phenolic for moderate temperature applications in the range of about 300°F to about 500°F, and polyimide for higher temperature applications in the range of about 500°F to about 600°F. For lower temperature applications up to about 350°F, the liner 20, 20A, 20B may be fabricated as a homogenous machinable liner formulated from a curable acrylate composition with various fillers for structure and PTFE for lubrication. The liner 20, however, is not limited to PTFE and a thermoset resin as other material(s) are suitable for use in the moderate to high temperature environments in which the bearing assembly 10 is to be used. Other liners that may be used include, but are not limited to, those with different fabric reinforcements, machinable materials (for example, materials without fabric reinforcement but with other reinforcement structures), and other self-lubricating materials that may include polyimide resins. Additionally, the liner 20, 20B could be attached to supporting structure without the outer race 14.

During operation of the bearing assembly 10, the liner 20, 20B on the inner engagement surface 18 of the outer race 14 engages the outer engagement surface 23 of the ball 12, thereby causing the ball 12 to move slidably and rotatably relative to the outer race 14; and/or the liner 20A on the inner surface 17 of the ball 12 engages the outer surface 11A of the shaft 11, thereby causing the shaft 11 to move slidably and rotatably relative to the ball 12. The liner 20, 20A, 20B is particularly suited for high-cycle engagement within a short range-of-motion. A high-cycle oscillatory rotational range-of-motion of the outer race 14 in relation to the ball 12, as shown by the directional arrows Q and R in FIG. 1C, can range from 0° up to 90°, 270° and 360°. In particular, such high-cycle angular range-of-motion can range from about 15° to about 45°. More particularly, such high-cycle angular range-of-motion can range from about 5° to about 10°. Accordingly, the bearing assembly 10 is particularly suited for high-cycle engagement within a short range-of-motion for moderate temperature applications in the range of about 300°F to about 500°F, and for higher temperature applications in the range of about 500°F to about 600°F. In addition, when the ball 12 is partially or fully disposed in the outer race 14, the ball 12 is misalignable and rotatable in relation to the outer member 14 as shown by the directional arrow Z and up to the angle α shown in FIG. 1D.

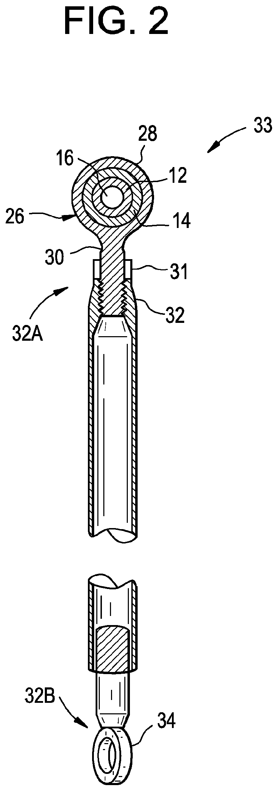

As shown in FIG. 2, a linkage apparatus is generally designated by the reference number 33. Suitable uses of the linkage apparatus 33 include, but are not limited to, use in aircraft, aerospace, heavy equipment, vehicular applications and applications involving high-cycle short range of motion. The linkage apparatus 33 includes a positioning member 32 that is generally tubular. A socket 26 is positioned on a first end 32A of the positioning member 32, and a coupling member 34 is positioned on a second end 32B thereof, as described herein. A bearing 10 is positioned in the socket 26 by, for example, staking in accordance with National Aerospace Standard 0331 (NAS 0331) "Bearing Installation and Retention by Swaging or Staking". The bearing 10 includes the liner 20 disposed on the inner engagement surface 18 of the outer race 14 (FIG. 1A), or the dual liner system 21 (FIG. 1B). The socket 26 has a head portion 28 and a neck or stem 30 extending therefrom that is removably secured or threadedly received in a receiving portion 31 of the positioning member 32 The socket 26 is moveable between at least a first position and a second position, for example, by threading the stem 30 into the receiving portion 31. While the stem 30 is described as being removably secured or threadedly received in a receiving portion 31, the present invention is not limited in this regard as the stem may be integral with or press fit into the receiving portion 31. The coupling member 34 is employed for coupling the positioning member 32 to a structural member 29 or the like as further described herein. In one embodiment, the coupling member 34 is press fit into a second end 32B of the positioning member 32. Although the coupling member 34 has been described as being press fit into the second end 32B of the positioning member 32, other methods for securing the coupling member 34 within the second end 32B of the positioning member 32, such as, for example, by threaded engagement, pins and corresponding apertures and other like fastening means, or by cooling the coupling member 34 and heating the coupling member 34, are considered within the scope of the invention.

The linkage apparatus 33 is especially suitable for use in pneumatic actuators, variable geometry systems, and as support links for accessories. In addition, the linkage apparatus 33 is particularly suitable as a high-cycle, short range-of-motion linkage apparatus for actuation of one or more positioning devices. Such positioning devices particularly include turbofan engine component linkages, such as, for example, a variable bypass vane actuator assembly.

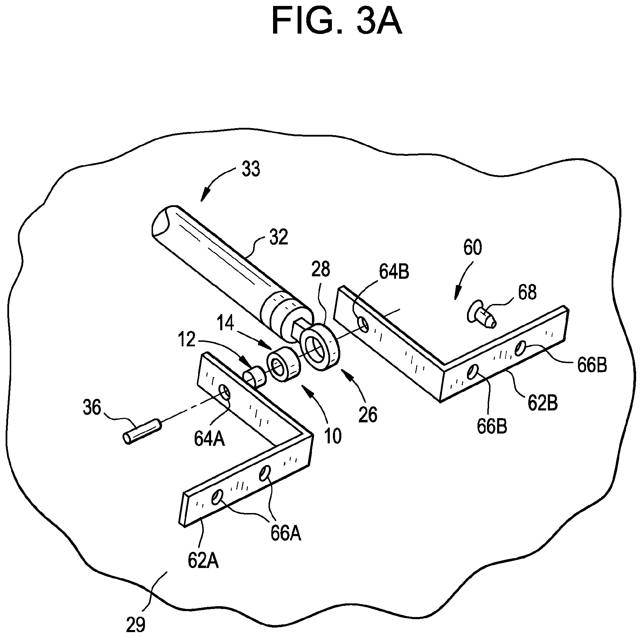

As shown in FIG. 3A, one embodiment of mounting the linkage apparatus 33 to the structural member 29 includes coupling the linkage apparatus 33 to a mounting assembly 60 that is, in turn, removeably and securely fastened to the structural member 29. In one embodiment, the structural member 29 is a structural member of a turbofan engine fan bleed system or air bypass system. The bearing assembly 10 is staked into the head portion 28 of the socket 26, for example in accordance with NAS 0331. The bearing 10 includes the liner 20 disposed on the inner engagement surface 18 of the outer race 14 (FIG. 1A), or the dual liner system 21 (FIG. 1B). The bearing assembly 10 is pivotally connected to a pair of mounting brackets 62A and 62B via a shaft or pin 36 extending through the bearing assembly 10. The pin 36 is secured in the bore 16 of the bearing assembly 10 and in a pair of apertures 64A and 64B defined respectively in the mounting brackets 62A and 62B via a press fit. The press fit, also known as an interference fit or friction fit, is maintained by friction after the pin 36 has been pushed or driven into the bore 16 and the apertures 64A and 64B by a process such as staking, for example in accordance with NAS 0331.

In one embodiment, the pin 36 is slightly undersized, thereby creating an initial slip fit within the bore 16 and the apertures 64A and 64B. A staking punch is then used to compress the pin 36 radially and thereby form the press fit or interference fit between the pin 36 and the bore 16 and the apertures 64A and 64B. The press fit relies upon the tensile and compressive strengths of the materials from which the respective parts are fabricated. Although the pin 36 has been described as being press fit or staked into the bore 16 and the apertures 64A and 64B, other methods for engaging the pin 36 within the bore 16 and the apertures 64A and 64B, for example, by cooling the pin 36 and heating the bore 16 and the apertures 64A and 64B, are considered within the scope of the invention. In addition, the pin 36 may be integrally formed with the ball 12.

Each of the mounting brackets 62A and 62B are removeably and securely fastened to the structural member 29 by fasteners 68 (only one fastener 68 shown) threreadily received within correspondingly tapped apertures (not shown) in the structural member 29. The present invention is not limited in this regard as the fasteners 68 may comprise a pin that is press fit into corresponding apertures in the structural member 29, the press fit being as described hereinabove with respect to the pin 36, the bore 16 and the apertures 64A and 64B. While fasteners 68 are shown and described for removeably and securely fastening the mounting brackets 62A and 62B to the structural member 29, the present invention is not limited in this regard as the mounting brackets 62A and 62B may be fixedly connected to the structural member 29 by any number of material joining means, such as, for example, use of suitable adhesives, welding, or being integrally forged or cast therewith, may also be employed without departing from the broader aspects of the invention.

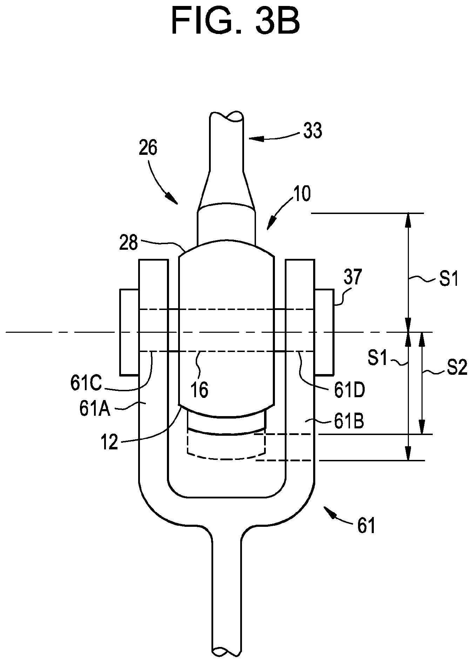

As shown in FIG. 3B, one embodiment of mounting the linkage apparatus 33 to a structural member includes coupling the linkage apparatus 33 to a mounting assembly 61 that is, in turn, removeably and securely fastened to the structural member. Mounting assembly 61 comprises a clevis configuration for retaining therein the bearing assembly 10 of the linkage apparatus 33. The bearing assembly 10 is staked into the head portion 28 of the socket 26, for example in accordance with NAS 0331. In one embodiment and as shown in FIG. 3B, the ball 12 is staked into the head portion 28 of the socket 26; the bearing assembly 10 not having an outer race 14. The bearing 10 includes the liner 20 disposed on the inner engagement surface 18 of the outer race 14 (FIG. 1A), or the dual liner system 21 (FIG. 1B). The bearing assembly 10 is pivotally connected to the mounting assembly 61 via a shaft or pin 37 extending through the ball 12 of the bearing assembly 10 and respective apertures 61C and 61D of arms 61A and 61B of the clevis configuration of the mounting assembly 61. In the embodiment of the bearing assembly 10 comprising the dual liner system 21 (FIG. IB), the pin 37 slidingly engages the bore 16 of the ball 12 of the bearing assembly 10. The linkage apparatus 33 defines a first shank distance S1 and a second shank distance or a short shank distance S2 which is less than S1.

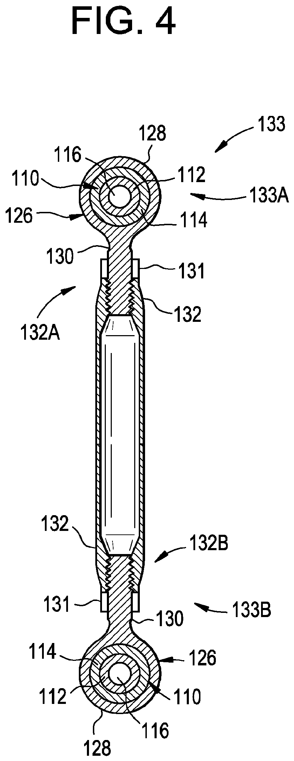

A linkage apparatus 133 is depicted in FIG. 4 and is similar to the linkage apparatus 33 shown in FIG. 2, thus like elements are given a like element number preceded by the numeral 1.

As shown in FIG. 4, the linkage apparatus 133 comprises a positioning member 132 that defines a first end 132A and a second end 132B. Each of the first and second ends 132A and 132B of the positioning member 132 include a pivot member or socket 126 having a head portion 128 and a stem 130 extending therefrom. The stem portion 130 is removably secured, for example, threadedly received in a receiving portion 131 of the positioning member 132. Each of the sockets 126 have a bearing assembly 110 staked therein, for example in accordance with NAS 0331. Each of the bearing assemblies 110 includes a ball 112 defining a bore 116 therethrough, an outer race 114 and a liner 20 (FIG. 1A) disposed between the ball 112 and the outer race 114, or a dual liner system 21 (FIG. 1B). Thus, the linkage apparatus 133 comprises bearing assemblies 110 staked into sockets 126 at a first end 133A and a second end 133B of the linkage apparatus 133.

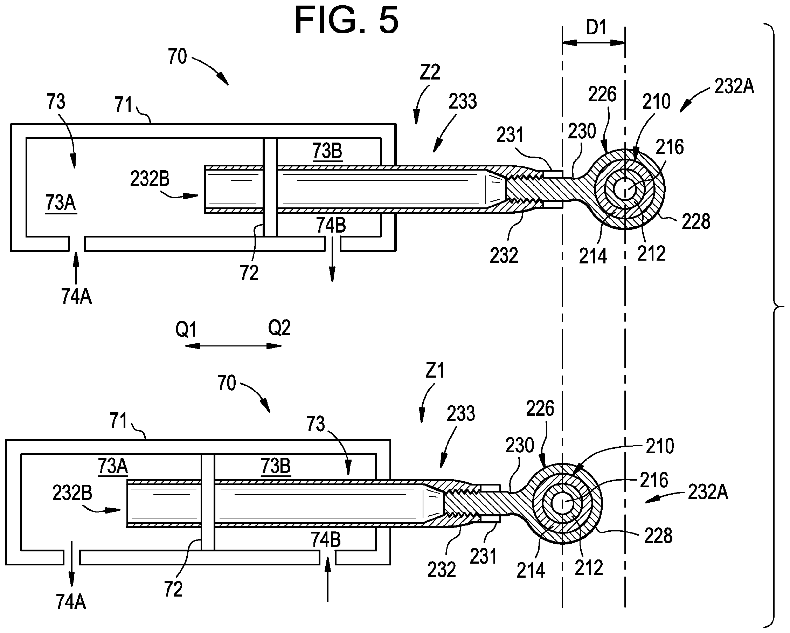

A linkage apparatus 233 for actuation of a positioning device is depicted in FIG. 5 and is similar to the linkage apparatus 33 shown in FIG. 2, thus like elements are given a like element number preceded by the numeral 2.

The linkage apparatus 233 depicted in FIG. 5 comprises an actuator such as, for example, a pneumatic actuator 70, that is shown in a retracted position R1 and an extended position R2. The actuator 70 that includes an actuator housing 71 and the linkage apparatus 233 comprises a positioning member 232 that defines a first end 232A and a second end 232B. The first end 232A of the positioning member 232 has a pivot member or socket 226 having a head portion 228 and a stem 230 extending therefrom that is removably secured or threadedly received in a receiving portion 231 of the positioning member 232. The socket 226 has a bearing assembly 210 staked therein, for example in accordance with NAS 0331. The bearing assembly 210 includes a ball 212 defining a bore 216 therethrough, an outer race 214 and a liner 20 (FIG. 1A) disposed between the ball 212 and the outer race 214, or a dual liner system 21 (FIG. 1B). While actuator 70 is shown and described as a pneumatic actuator, the present invention is not limited in this regard as a hydraulic actuator, an electro-mechanical actuator and the like may also be employed without departing from the broader aspects of the invention. In one embodiment, the actuator 70 comprises a hydraulic actuator using engine fuel as a hydraulic fluid therein.

The second end 232B of the linkage apparatus 233 is fixedly secured to a moveable block, plunger or piston 72 of the actuator 70 for actuation of the positioning device (not shown). The piston 72 divides an interior volume 73 of the actuator housing 71 into a first interior volume 73A and a second interior volume 73B. The interior volume 73 of the actuator housing 71 is in communication with a motive fluid such as a hydraulic fluid or pressurized air, as described further herein.

The actuation of the positioning device is initiated when the piston 72 and the linkage apparatus 233 is in the retracted position R1. In operation, the hydraulic fluid is pumped into the first interior volume 73A via a port 74A formed in the housing 71, at a pressure P1, and a corresponding amount of hydraulic fluid is released from the second interior volume 73B via a port 74B formed in the housing 71, at a pressure P2 which is less than pressure P1. The influx of the hydraulic fluid into the first interior volume 73A (and the corresponding release of hydraulic fluid from the second interior volume 73B) causes the piston 72 to advance in a direction indicated by the arrow Q2, thereby extending the linkage apparatus 233 in the direction Q2 such that the bearing assembly 210 advances a distance D1 in the direction Q2, thereby extending or actuating a positioning device. Similarly, the hydraulic fluid is pumped into the second interior volume 73B via the port 74BA, at a pressure PI, and a corresponding amount of hydraulic fluid is released from the first interior volume 73A via the port 74A, at a pressure P2 which is less than pressure P1. The influx of the hydraulic fluid into the second interior volume 73B (and the corresponding release of hydraulic fluid from the first interior volume 73A) causes the piston 72 to retract in a direction indicated by the arrow Q1, thereby retracting the linkage apparatus 233 in the direction Q1 such that the bearing assembly 210 retracts the distance D1 in the direction Q1, thereby retracting or de-actuating the positioning device. The force that acts upon the positioning device is equal to the pressure P1 of the hydraulic fluid pumped into the interior volume 73 of the housing 71 multiplied by the area of the piston 72. Accordingly, linkage apparatus 233 comprises the actuator 70 having a positioning member 232 that defines a shaft or socket 26 extending therefrom and is operable between the retracted condition or position Z1 and the extended condition or position Z2 to move the positioning 232 member between at least the position Z1 and the position Z2.

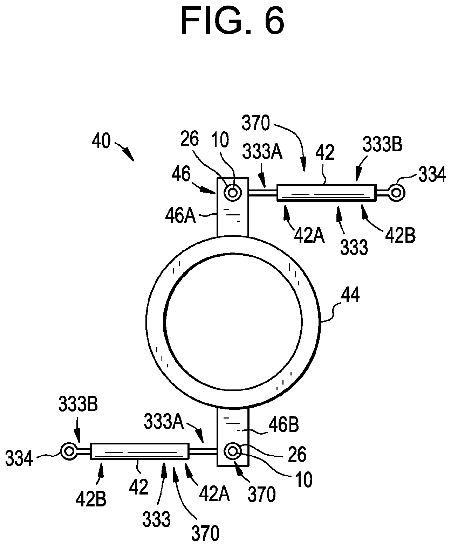

A linkage apparatus 333 for actuation of a positioning device is depicted in FIG. 6 and is similar to the linkage apparatus 33 shown in FIG. 2, thus like elements are given a like element number preceded by the numeral 3.

As shown in FIG. 6, one embodiment of the linkage apparatus 333 is configured for use in a variable bypass vane ("VBV") actuator assembly for the control of bleed and/or bypass air in a VBV actuator system for a turbofan engine. In the VBV actuator system, a set of stator vanes internal to the turbofan engine is adjusted to obtain a smoother air flow through the turbofan engine. The VBV actuator system is shown generally at 40 and is hereinafter referred to as "system 40." System 40 comprises an actuator ring 44 defining one or more flanges 46, for example, two flanges 46A and 46B are shown. The linkage apparatus 333 includes an actuator 370 (similar to the actuator 70 shown in FIG. 5) pivotally secured to each of the flanges 46 proximate a first end 333A of the linkage apparatus 333. In particular, the pivotal connection between the actuator 370 and the flange 46 is provided via the bearing assembly 10, mounting brackets 62A and 62B, and shaft or pin 36 similar to that depicted in FIG. 3A. The linkage apparatus 333 further comprises a positioning member 42 having a first end 42A and a second end 42B. The actuator 370 is received within or fixedly attached to the first end 42A of the positioning member 42. The actuator 370 includes a socket 26 (as shown in FIG. 3A) comprising a bearing assembly 10 as described above with reference to FIG. 1A or FIG. 1B. In one embodiment, a coupling member 334 is received within or fixedly attached to the second end 42B of the positioning member 42 for coupling the positioning member 42 to a structural member (not shown). The present invention is not so limited as the linkage apparatus 333 may define the linkage apparatus 133 depicted in FIG. 4 such that a second actuator (not shown) is received within or fixedly attached to the second end 42B of the positioning member 42. Upon operation of the actuator 370, the flange 46 and/or the actuator ring 44 is moved to adjust the stator vanes (not shown) in the turbofan engine. The bearing assemblies 310 in the sockets 326 allow for the desired operation of the system 40 at the temperatures encountered in the turbofan engine. While the linkage apparatus 333 comprising the pneumatically operable actuator 370 having a socket 326 and a bearing assembly 310 is shown and described as being operable with VBV actuator assembly, system 40, the present invention is not limited in this regard as the linkage apparatus 333 is configured to be operable with other embodiments of a VBV actuator assembly without departing from the broader aspects of the invention.

A linkage apparatus 433 for actuation of a positioning device is depicted in FIG. 7A and is similar to the linkage apparatus 33 shown in FIG. 2, thus like elements are given a like element number preceded by the numeral 4.

As shown in FIG 7A, the linkage apparatus 433 comprises a positioning member 432 that defines a first end 432A, a second end 432B, and a central axis "A2" therethrough. The first end 432A of the positioning member 432 comprises a pivot member or socket 426 having a head portion 428 configured to receive a bearing assembly 10 therein similar to the bearing 10 of FIG. 1A or FIG. 1B. The bearing assembly 10 comprises a ball 12, an outer race 14 and a liner 20 disposed between the ball 12 and the outer race 14 (FIG. 1A), or the dual liner system 21 (FIG. 1B). The socket 426 defines a shank or stem 430 extending therefrom that is removably secured or threadedly received in a receiving portion 431 of the positioning member 432. The head portion 428 defines a distal end or a first end 428A and a mating end or a second end 428B proximate the receiving portion 431 of the positioning member 432.

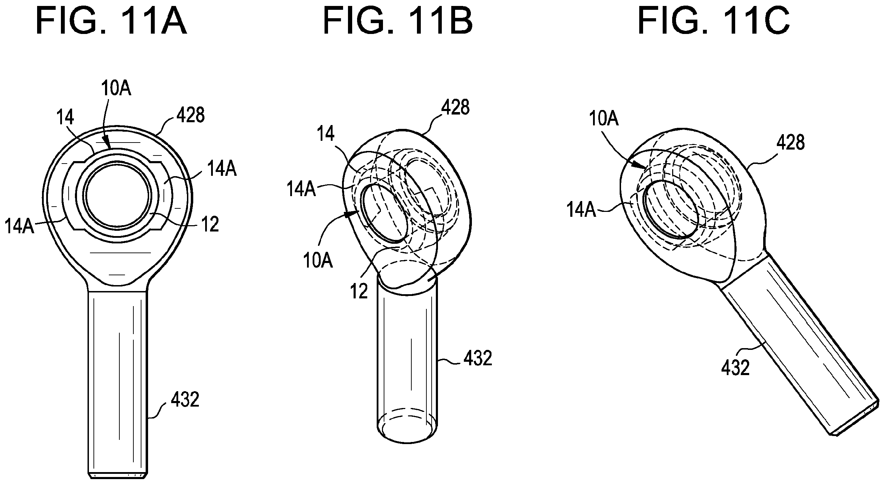

In one embodiment, the head portion 428 is configured to receive a spherical plain bearing assembly staked or coined therein by plastic deformation. In one embodiment, the spherical plain bearing assembly comprises an angular contact self-aligning bearing. In another embodiment and as shown in FIGS. 11A-11C, the head portion 428 is configured to receive a load slot bearing 10A wherein the outer race 14 defines one or more slots 14A to permit insertion of the ball 12 therein, such as, for example, by swaging, for example in accordance with NAS 0331. In yet another embodiment, the head portion 428 is configured to receive a bearing wherein the outer race defines a split-race cartridge. In yet another embodiment, the head portion 428 is integrally formed with the outer race of a bearing assembly. In other embodiments, the ball may comprise a split-ball or a spring-ball or the like which is received in the outer race of the bearing assembly.

In one embodiment of the linkage apparatus 433, the second end 432B of the positioning member 432 defines a coupling member 434 for coupling the positioning member 432 to a structural member (not shown) as described above with reference to FIG. 2. In one embodiment, the coupling member 434 is configured to couple the positioning member 432 to a structural member of a turbofan engine fan bleed air system. More particularly, the linkage apparatus 433 is configured to be operable with a VBV actuator assembly. In another embodiment, the second end 432B of the positioning member 432 comprises a truncated end of the positioning member 432 defining an end face 435 configured to be fixedly attached to a structural member (not shown) by, for example, welding, or fixedly received within a structural member by, for example, a press fit.

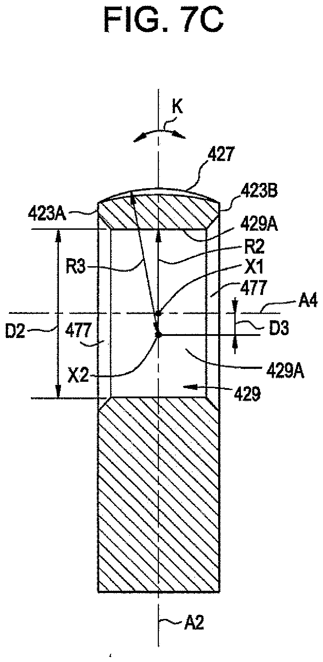

Still referring to FIG. 7A and 7C, the head portion 428 of socket 426 defines a truncated arcuate outer surface 427 extending laterally in the direction of the arrow K between a first end face 423A and a second end face 423B (shown only in FIG. 7C). The first end face 423A and the second end face 423B are substantially parallel to each other, as shown in FIG. 7C. The arcuate surface 427 also extends circumferentially in the direction of the arrow K' around the head portion 428, as shown in FIG 7A. In one embodiment, the arcuate outer surface 427 approximates a substantially spherical outer surface. As best shown in FIG. 7C, a chamfer 477 extends inwardly from each of the first end face 423A and the second end face 423B. The head portion 428 of socket 426 further defines a bore 429 extending therethrough. The bore 429 defines a substantially cylindrical inner surface 429A that has an inner diameter "D2." In one embodiment, the cylindrical inner surface 429A of the bore 429 is substantially perpendicular to the first end face 423A and second end face 423B of the arcuate outer surface 427 of the head portion 428 of socket 426. In one embodiment, D2 is in the range of about 0.875 inch to about 1.125 inches, and more particularly about 1.0 inch. In one embodiment, the cylindrical inner surface 429A of the bore 429, and thus the inner diameter D2, define a central axis A4 (see FIG. 7C) that intersects with the central axis A2 of the linkage apparatus 433, thereby defining a first center point "X1" of the bore 429. In the embodiment illustrated in FIGS. 7A-C, the inner surface 429A and the arcuate outer surface 427 are not concentric such that the center point X1 is offset from the center point X2. In one embodiment, the arcuate outer surface 427 is defined by a substantially constant radius of curvature. In one embodiment, the inner surface 429A and the arcuate outer surface 427 are concentric.

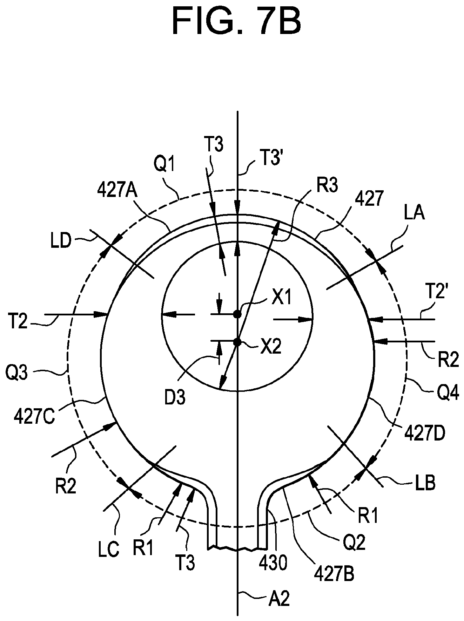

As shown in FIG. 7B, the arcuate outer surface 427 is defined, in part, by a plurality of radii of curvature such that the arcuate outer surface 427 has: 1) a first spherical outer surface section 427A which extends across an arc Q1 which extends between a first plane LA and a fourth plane LD; 2) a second spherical outer surface section 427B which extends across an arc Q2 which extends between a second plane LB and a third plane LC; 3) a third spherical outer surface section 427C which extends across an arc Q3 which extends between the third plane LC and the fourth plane LD; and 4) a fourth spherical outer surface section 427D which extends across an arc Q4 which extends between the first plane LA and the second plane LB. The first and second spherical outer surface sections 427A and 427B are blended therebetween by the third spherical outer surface section 427C on one side (i.e., at the third plane LC and the fourth plane LD). The first and second spherical outer surface sections 427A and 427B are blended therebetween by the fourth spherical outer surface section 427D on an opposing side (i.e., at the first plane LAC and the second plane LB). Accordingly, each spherical outer surface section 427A, 427B, 427C, 427D defines a different radius of curvature than the spherical outer surface sections 427A, 427B, 427C, and/or 427D that are adjacent thereto. For example and as shown in FIGS. 7A and 7B, in one embodiment, the arcuate outer surface 427 is defined by a plurality of transitioning radii of curvature R1, R2, and R3 wherein R1<R2<R3. In particular, the first spherical outer surface section 427A defines radius of curvature R3; the second spherical outer surface section 427B defines radius of curvature R1; and the third and fourth spherical outer surface sections 427C and 427D each define radius of curvature R2. A material thickness "T1" extends from the cylindrical inner surface 429A of the bore 429 to the arcuate outer surface 427. In such an embodiment, T1 ranges from a maximum thickness along the spherical outer surface section 427B having radius R1 (proximate the second end 428B of the head portion 428), through an intermediate thickness along the arcuate outer surface sections 427C and 427D having radius R2, and transitioning to a lesser thickness along the spherical outer surface section 427A having radius R3 (proximate the first end 428A of the head portion 428). The minimum thickness T1 occurs at the first end 428A of the head portion 428 along the axis A2. In one embodiment: (i) R1 ranges from about 0.125 inch to about 0.375 inch, and more particularly is about 0.175 inch; (ii) R2 ranges from about 0.750 inch to about 0.875 inch, and more particularly is about 0.817 inch; and (iii) R3 ranges from about 0.875 inch to about 1.0 inch, and more particularly is about 0.950 inch. At least one of the outer surface sections, for example spherical outer surface section 427A having radius R3, defines a spherical center point or a second center point "X2" along the central axis A2 of the linkage apparatus 433. In one embodiment, the first center point X1 of the bore 429 is offset from the second center point X2 of the spherical outer surface section 427A by an offset distance "D3." Such an embodiment of the linkage apparatus 433, having the offset distance D3 is referred to herein as a "low profile linkage apparatus." In one embodiment of the low profile linkage apparatus, the offset distance D3 is in the range of up to about 33% of the radius of curvature R3 of the spherical outer surface section 427A, and more particularly in the range of about 5% to about 25% of the radius of curvature R3. In one embodiment, the offset distance D3 is in the range of about 10% to about 15% of the radius of curvature R3.

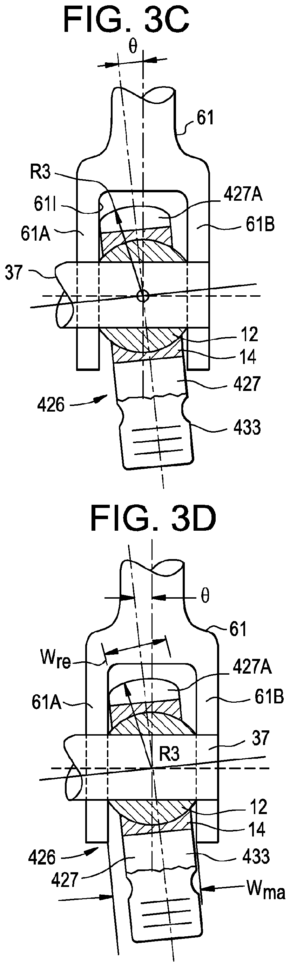

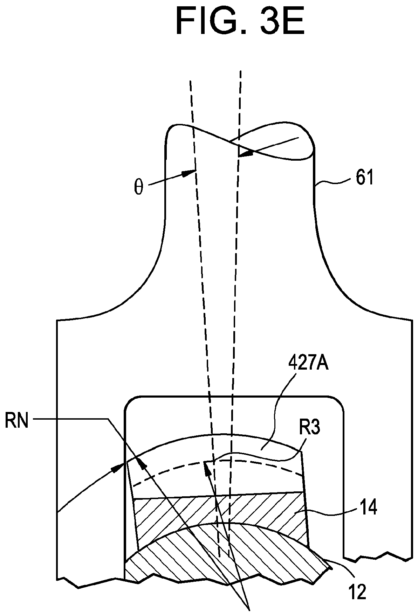

Referring back to FIGS. 3C, 3D and 3E, the linkage apparatus 433 is misalignable in relation to the mounting assembly 61 wherein the mounting assembly 61 comprises the head portion 428 of the socket 426 having the truncated arcuate outer surface 427 as shown in FIG. 7B. The spherical outer surface section 427A defines the radius R3 and the thickness T3. The rod end or the head 428 defines a width Wre. The linkage apparatus 33 defines a width Wma. Such width is also defined by a distance between mounting brackets to which the linkage apparatus 33 is secured, for example the mounting brackets 62A and 62B of FIG. 3A. As indicated, a maximum misalignment of the linkage apparatus 33 in relation to the mounting assembly 61 occurs when the spherical outer surface section 427A impinges on an inwardly facing surface 61E of the arm 61A of the mounting assembly 61 and defines a maximum misalignment angle θ. As shown in FIG. 3E, a greater maximum misalignment of the linkage apparatus 33 in relation to the mounting assembly 61 is provided by the outer surface section 427A defining the radius R3 in relation to a socket head having a uniform thickness and defining a radius RN. The reduction in the radius from radius RN to radius R3 provides for greater maximum misalignment of the linkage apparatus 33 in relation to the mounting assembly 61. The maximum misalignment angle θ is determined in accordance with the following mathematical expression:

$$\theta = \sin^{-1}(T3/R3x2) - \sin^{-1}(Wre/R3x2)$$

where: θ = the maximum misalignment angle; T3 = the thickness of the outer surface section 427A; R3 = the radius of the outer surface section 427A; and Wre = width of the rod end or the head 428.

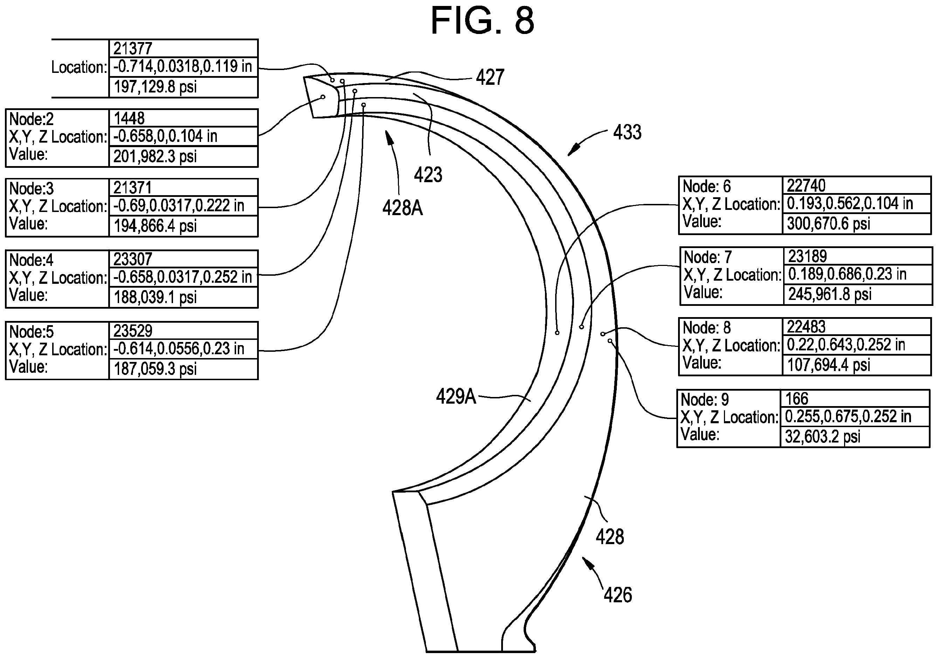

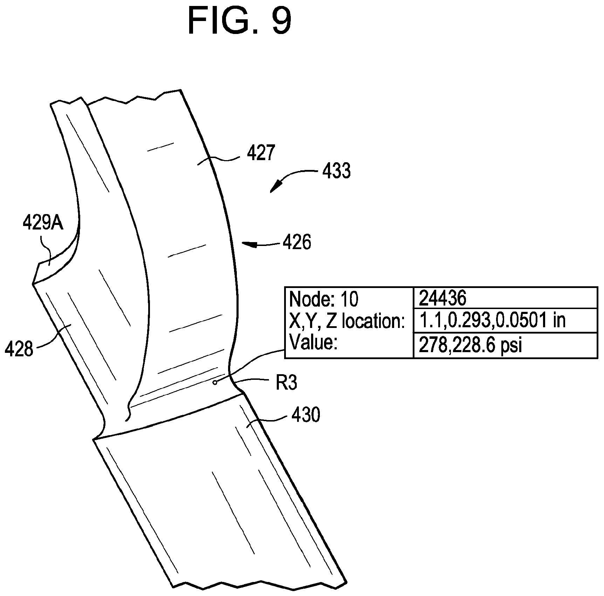

The linkage apparatus 433 having a particularly defined offset distance D3 provides a linkage apparatus that properly engages a short shanked clevis, eliminates the need for an additional fabrication process and provides an advantageous stress concentration profile enabling the linkage apparatus to carry higher loads as compared to prior art linkages, as further described herein with respect to FIGS. 8 and 9.

In one embodiment, the low profile linkage apparatus 433 has a bearing assembly 10 staked therein and the bearing assembly 10 includes a high-temperature self-lubricating liner system formulated with PFOA PTFE bonded with a polyimide resin system. The low profile linkage apparatus 433 is particularly useful in limited space applications having high dynamic loading and oscillation. In addition, the low profile linkage apparatus 433 having an offset distance D3 is particularly useful in resolving interference issues that arise when assembling the linkage apparatus with other components of an actuator assembly or system. For example, such an interference may arise when connecting the linkage apparatus to a fastener that provides for rotation along selected axes while restricting rotation in others, such as, for example, a clevis fastener with short shanks or short receiving members. In such an application, the low profile linkage apparatus 433 defines an offset distance D3 of sufficient distance to alleviate the interference by reducing the material envelope of the head portion 428 of the socket 426 of the low profile linkage apparatus 433.

As described above with reference to FIGS. 7A-C, one embodiment of the linkage apparatus 433 is configured to be operable with a VBV actuator assembly. The linkage apparatus 433 must support a static radial load in the range of up to about 20,000 lbs which corresponds to certain operating parameters and conditions associated with the engagement of the VBV actuator assembly. In one embodiment, the linkage apparatus 433 is fabricated from a martensitic precipitation/age-hardening stainless steel exhibiting high strength and hardness along with sufficient resistance to corrosion and stress-corrosion cracking. Such an alloy also exhibits sufficient ductility and toughness in both the longitudinal and transverse directions. One such material is known as 17-4 PH stainless steel. Another such material is known as PH 13-8, an alloy comprising 13% Chromium and 8% Nickel in accordance with the SAE International Standard AMS 5629. Such materials are hardened by heat treatment and are specified by a "Condition" according to such heat treatment. For example, Condition H 950, H 1000, H 1025, H 1050, H 1100, or H 1150 signifies the material is precipitation or age hardened by heating solution-treated material at a specified temperature. In one embodiment, the linkage apparatus 433 is fabricated from PH 13-8 Condition H 1000.

A finite element analysis ("FEA") of three of the linkage apparatuses 433 was conducted by the inventors. One of the linkage apparatuses 433 was manufactured from 17-4PH Condition H1150, another from 17-4PH Condition H1025 and a third from PH 13-8 Condition H 1000. The finite element analysis was completed using SolidWorks® Simulation software. (SolidWorks® is a registered trademark of Dassault Systèmes SolidWorks Corporation.) The FEA was performed using a non-linear static analysis with a quarter model assembly with dual symmetry for simplicity. The results of the stress analysis are provided below in Table 1. Based on the stress analysis, the linkage apparatus 433 fabricated from PH 13-8 Condition H 1000 exhibits a yield strength exceeding 200 kilopounds per square inch ("ksi") and thus supports the required load of 20,000 lbs without risk of plastic deformation.

Table 1

| Material | Heat Treat Condition | Yield Strength (ksi) | Tensile Strength (ksi) | Average Stress (ksi) |
|----------|---------------------|---------------------|------------------------|----------------------|
| 17-4PH | H1150 | 125 | 100 | 166.879 |
| 17-4PH | H1025 | 155 | 145 | 167.058 |

(continued)

| Material | Heat Treat Condition | Yield Strength (ksi) | Tensile Strength (ksi) | Average Stress (ksi) |
|---|---|---|---|---|
| PH13-8 | H1000 | 201 | 190 | 166.636 |

The results of the stress analysis of the linkage apparatus 433 are illustrated in FIGS. 8 and 9 with respect to a plurality of nodes 1-10 designated on the linkage apparatus 433. Each of the nodes 1-10 is designated by a set of coordinates (x, y, z). As indicated in FIG. 8, peak stresses increase due to the reduction in material at certain designated nodes, such as, for example, nodes 6 and 7 that exhibit a stress value respectively of about 300 ksi and about 245 ksi, respectively. As further indicated in FIG. 8, node 2, located at a top portion 428A of the head portion 428 of the socket 426 of the low profile linkage apparatus 433 exhibits a stress value of about 202 ksi. As indicated in FIG. 9, a high stress area is located at the neck of the stem 430 at node 10 and exhibits a stress value of about 278 ksi. A root radius "R3" drives the stress concentration. In one embodiment of the linkage apparatus 433, R3 is increased to reduce the vulnerability to the exhibited stress in this area.

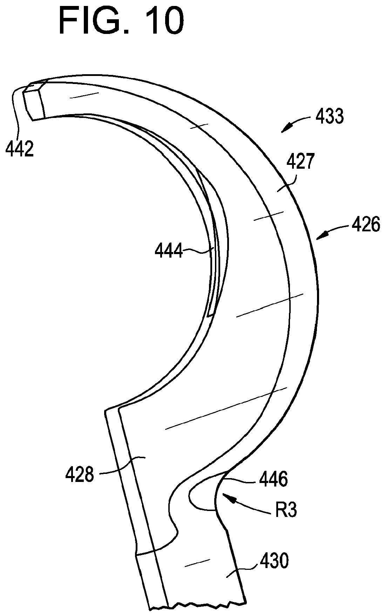

A plot of the stress area concentrations of the linkage apparatus 433 is shown in FIG. 10 and correlates with the stress values exhibited at nodes 1-10 in FIGS. 8 and 9. The stress area concentrations include: (i) a first location 442 that corresponds to node 1 and exhibits a stress value of about 197 ksi; (ii) a second location 444 that corresponds to node 6 and exhibits a stress value of about 300 ksi; and (iii) a third location 446 that corresponds to node 10 and exhibits a stress value of about 278 ksi.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A linkage apparatus (433) for actuation of a positioning device, the linkage apparatus (433) comprising:

   a pivot member (426) having a head portion (428) configured to receive by plastic deformation a bearing assembly (10) therein, the head portion (428) defining a bore (429) therein having a substantially cylindrical inner surface (429A) that defines an inner diameter (D2) having a first center point (XI), the head portion (428) further defining a truncated arcuate outer surface (427), a portion (427A) of the truncated arcuate outer surface (427) defines a radius of curvature and a second center point (X2);
   a stem (430) having a central axis (A2), the stem (430) extending from the pivot member (426) along the central axis (A2) in a first direction; and
   the second center point (X2) is offset from the first center point (X1) in the first direction and a distance (D3) between the first center point (X1) and the second center point (X2), measured along the central axis (A2), is up to about 33% of the radius of curvature.

2. The linkage apparatus (433) of claim 1 wherein the distance between the first center point (X1) and the second center point (X2) is from about 5% to about 25% of the radius of curvature.

3. The linkage apparatus (433) of claim 1 wherein the linkage apparatus (433) is fabricated from a martensitic precipitation/age-hardening stainless steel alloy.

4. The linkage apparatus (433) of claim 1 wherein the linkage apparatus (433) is fabricated from PH 13-8.

5. The linkage apparatus (433) of claim 1 wherein the linkage apparatus (433) is configured to be operable with a turbofan engine fan bleed air system.

6. The linkage apparatus (433) of claim 5 wherein the linkage apparatus (433) is configured to be operable with a variable bypass vane actuator assembly.

7. The linkage apparatus (433) of claim 1 further comprising the head portion (428) plastically deformed around a bearing assembly (10).

8. The linkage apparatus (433) of claim 7 wherein the bearing assembly (10) comprises:

an inner member (12) having an outer engagement surface (23) and a bore (16) extending at least partway therethrough;
an outer member (14) positioned at least partially around the inner member (12), the outer member (14) having an inner engagement surface (18) contoured to a shape complementary to the outer engagement surface (23) of the inner member (12); and
a self-lubricating liner (20) disposed between the inner engagement surface (18) of the outer member (14) and the outer engagement surface (23) of the inner member (12).

9. A linkage apparatus (433) for actuation of a positioning device, the linkage apparatus (433) comprising:

a positioning member (432) defining a first end (432A), a second end (432B), and a central axis (A2) therethrough;
a pivot member (426) defined at the first end (432a) of the positioning member (432) and having a head portion (428) configured to receive by plastic deformation a bearing assembly (10) therein, the head portion (428) defining a bore (429) therein having a substantially cylindrical inner surface (429A) that defines an inner diameter (D2) having a first center point (X1), the head portion (428) further defining a truncated arcuate outer surface (427), a portion of the truncated arcuate outer surface (427A) defines a radius of curvature and a second center point (X2);
a stem (432) extending from the pivot member (426) along the central axis (A2) of the positioning member (432) in a first direction;
a coupling member (434) defined at the second end (432B) of the positioning member (432) for coupling the positioning member (432) to a structural member (29); and
the second center point (X2) is offset from the first center point (X1) in the first direction and a distance between the first center point (X1) and the second center point (X2), measured along the central axis (A2), is in the range of up to about 33% of the radius of curvature.

10. The linkage apparatus (433) of claim 9 wherein the linkage apparatus (433) is fabricated from PH 13-8.

11. The linkage apparatus (433) of claim 9 further comprising the head portion (428) plastically deformed around a bearing assembly (10).

12. The linkage apparatus (433) of claim 9 wherein the bearing assembly (10) comprises:

an inner member (12) having an outer engagement surface (23) and a bore (16) extending at least partway therethrough;
an outer member (14) positioned at least partially around the inner member (12), the outer member (14) having an inner engagement surface (18) contoured to a shape complementary to the outer engagement surface (23) of the inner member (12); and
a self-lubricating liner (20) disposed between the inner engagement surface (18) of the outer member (14) and the outer engagement surface (23) of the inner member (12).

13. The linkage apparatus (433) of claim 7 wherein the bearing assembly (10) comprises:

an inner member (12) having an outer engagement surface (23) and a bore (16) extending at least partway therethrough;
an outer member (14) positioned at least partially around the inner member (12), the outer member (14) having an inner engagement surface (18) contoured to a shape complementary to the outer engagement surface (23) of the inner member (12); and
a self-lubricating liner (20) disposed between an inner surface (17) of the bore (16) of the inner member (12) and a shaft (11) extending at least partway therethrough.

14. The linkage apparatus (433) of claim 8 wherein the bearing assembly (20) further comprises:
a self-lubricating liner (20) disposed between an inner surface (17) of the bore (16) of the inner member (12) and a shaft (11) extending at least partway therethrough.

15. The linkage apparatus (433) of claims 1 or 9, wherein the arcuate outer surface (427) is defined by a plurality of radii of curvature,
   wherein the plurality of radii of curvature includes a first spherical outer surface section (427A) extending across a first arc (Q1), the first arc (Q1) extending between a first plane (LA) and a fourth plane (LD); a second spherical outer surface section (427B) extending across a second arc (Q2), the second arc (Q2) extending between a second plane (LB) and a third plane (LC); a third spherical outer surface section (427C) extending across a third arc (Q3), the third arc (Q3) extending between the third plane (LC) and the fourth plane (LD), and a fourth spherical outer surface section (427D) extending across a fourth arc (Q4), the fourth arc (Q4) extending between the first plane (LA) and the second plane (LB).

16. The linkage apparatus (433) of claim 16, wherein the first spherical outer surface section (427A) and the second spherical outer surface section (427B) are blended by a fourth spherical outer surface section (427D) at the first plane (LA) and the second plane (LB).

17. The linkage apparatus (433) of claim 17, wherein each spherical outer surface section, (427A, 427B, 427C, 427D) defines a different radius of curvature than an adjacent spherical outer surface section.


**Patentansprüche**

1. Gestängevorrichtung (433) zur Betätigung einer Positionierungseinrichtung,
   wobei die Gestängevorrichtung (433) umfasst:

   ein Zapfenelement (426) mit einem Kopfabschnitt (428), der dazu ausgestaltet ist, durch plastische Verformung eine Lagerbaugruppe (10) in sich aufzunehmen, wobei der Kopfabschnitt (428) in sich eine Bohrung (429) definiert, die eine im Wesentlichen zylindrische Innenfläche (429A) aufweist, die einen Innendurchmesser (D2) mit einem ersten Mittelpunkt (X1) definiert, wobei der Kopfabschnitt (428) ferner eine abgeschnittene bogenförmige Außenfläche (427) definiert, wobei ein Abschnitt (427A) der abgeschnittenen bogenförmigen Außenfläche (427) einen Krümmungsradius und einen zweiten Mittelpunkt (X2) definiert;
   einen Schaft (430) mit einer Mittelachse (A2), wobei der Schaft (430) sich von dem Zapfenelement (426) entlang der Mittelachse (A2) in einer ersten Richtung erstreckt;
   wobei der zweite Mittelpunkt (X2) von dem ersten Mittelpunkt (X1) in der ersten Richtung versetzt ist und ein Abstand (D3) zwischen dem ersten Mittelpunkt (X1) und dem zweiten Mittelpunkt (X2), gemessen entlang der Mittelachse (A2), bis zu etwa 33 % des Krümmungsradius beträgt.

2. Gestängevorrichtung (433) nach Anspruch 1, wobei der Abstand zwischen dem ersten Mittelpunkt (X1) und dem zweiten Mittelpunkt (X2) etwa 5 % bis etwa 25 % des Krümmungsradius beträgt.

3. Gestängevorrichtung (433) nach Anspruch 1, wobei die Gestängevorrichtung (433) aus einer martensitischen ausscheidungs-/kaltaushärtenden nichtrostenden Stahllegierung hergestellt ist.

4. Gestängevorrichtung (433) nach Anspruch 1, wobei die Gestängevorrichtung (433) aus PH 13-8 hergestellt ist.

5. Gestängevorrichtung (433) nach Anspruch 1, wobei die Gestängevorrichtung (433) dazu ausgestaltet ist, mit dem Zapfluftsystem eines Mantelstromtriebwerk-Gebläses betriebsfähig zu sein.

6. Gestängevorrichtung (433) nach Anspruch 5, wobei die Gestängevorrichtung (433) dazu ausgestaltet ist, mit einer Aktuatorbaugruppe einer Schaufel für variablen Nebenstrom betriebsfähig zu sein.

7. Gestängevorrichtung (433) nach Anspruch 1, die ferner den Kopfabschnitt (428) umfasst, der um eine Lagerbaugruppe (10) herum plastisch verformt ist.

8. Gestängevorrichtung (433) nach Anspruch 7, wobei die Lagerbaugruppe (10) umfasst: ein inneres Element (12) mit einer äußeren Eingriffsfläche (23) und einer Bohrung (16), die sich wenigstens über eine Teilstrecke durch dieses hindurch erstreckt;
   ein äußeres Element (14), das wenigstens teilweise um das innere Element (12) herum angeordnet ist, wobei das äußere Element (14) eine innere Eingriffsfläche (18) aufweist, die mit einer Form konturiert ist, die zu der äußeren Eingriffsfläche (23) des inneren Elements (12) komplementär ist; und

eine selbstschmierende Zwischenlage (20), die zwischen der inneren Eingriffsfläche (18) des äußeren Elements (14) und der äußeren Eingriffsfläche (23) des inneren Elements (12) angeordnet ist.

9. Gestängevorrichtung (433) zur Betätigung einer Positionierungseinrichtung, wobei die Gestängevorrichtung (433) umfasst:

ein Positionierungselement (432), das ein erstes Ende (432A), ein zweites Ende (432B) und ein Mittelachse (A2) durch sich hindurch definiert;

ein Zapfenelement (426), das an dem ersten Ende (432a) des Positionierungselements (432) definiert ist und einen Kopfabschnitt (428) aufweist, der dazu ausgestaltet ist, durch plastische Verformung eine Lagerbaugruppe (10) in sich aufzunehmen, wobei der Kopfabschnitt (428) eine Bohrung (429) in sich definiert, die eine im Wesentlichen zylindrische Innenfläche (429A) aufweist, die einen Innendurchmesser (D2) mit einem ersten Mittelpunkt (X1) definiert, wobei der Kopfabschnitt (428) ferner eine abgeschnittene bogenförmige Außenfläche (427) definiert, wobei ein Abschnitt der abgeschnittenen bogenförmigen Außenfläche (427A) einen Krümmungsradius und einen zweiten Mittelpunkt (X2) definiert;

einen Schaft (432), der sich von dem Zapfenelement (426) entlang der Mittelachse (A2) des Positionierungselements (432) in einer ersten Richtung erstreckt;

ein Kopplungselement (434), das an dem zweiten Ende (432B) des Positionierungselements (432) definiert ist, zum Koppeln des Positionierungselements (432) mit einem Strukturelement (29); und

wobei der zweite Mittelpunkt (X2) von dem ersten Mittelpunkt (X1) in der ersten Richtung versetzt ist und ein Abstand zwischen dem ersten Mittelpunkt (X1) und dem zweiten Mittelpunkt (X2), gemessen entlang der Mittelachse (A2), im Bereich von bis zu etwa 33 % des Krümmungsradius liegt.

10. Gestängevorrichtung (433) nach Anspruch 9, wobei die Gestängevorrichtung (433) aus PH 13-8 hergestellt ist.

11. Gestängevorrichtung (433) nach Anspruch 9, die ferner den Kopfabschnitt (428) umfasst, der um eine Lagerbaugruppe (10) herum plastisch verformt ist.

12. Gestängevorrichtung (433) nach Anspruch 9, wobei die Lagerbaugruppe (10) umfasst: ein inneres Element (12) mit einer äußeren Eingriffsfläche (23) und einer Bohrung (16), die sich wenigstens über eine Teilstrecke durch dieses hindurch erstreckt;

ein äußeres Element (14), das wenigstens teilweise um das innere Element (12) herum angeordnet ist, wobei das äußere Element (14) eine innere Eingriffsfläche (18) aufweist, die mit einer Form konturiert ist, die zu der äußeren Eingriffsfläche (23) des inneren Elements (12) komplementär ist; und

eine selbstschmierende Zwischenlage (20), die zwischen der inneren Eingriffsfläche (18) des äußeren Elements (14) und der äußeren Eingriffsfläche (23) des inneren Elements (12) angeordnet ist.

13. Gestängevorrichtung (433) nach Anspruch 7, wobei die Lagerbaugruppe (10) umfasst:

ein inneres Element (12) mit einer äußeren Eingriffsfläche (23) und einer Bohrung (16), die sich wenigstens über eine Teilstrecke durch dieses hindurch erstreckt;

ein äußeres Element (14), das wenigstens teilweise um das innere Element (12) herum angeordnet ist, wobei das äußere Element (14) eine innere Eingriffsfläche (18) aufweist, die mit einer Form konturiert ist, die zu der äußeren Eingriffsfläche (23) des inneren Elements (12) komplementär ist; und

eine selbstschmierende Zwischenlage (20), die zwischen einer Innenfläche (17) der Bohrung (16) des inneren Elements (12) und einer Welle (11), die sich wenigstens über eine Teilstrecke durch diese hindurch erstreckt, angeordnet ist.

14. Gestängevorrichtung (433) nach Anspruch 8, wobei die Lagerbaugruppe (20) ferner umfasst:
eine selbstschmierende Zwischenlage (20), die zwischen einer Innenfläche (17) der Bohrung (16) des inneren Elements (12) und einer Welle (11), die sich wenigstens über eine Teilstrecke durch diese hindurch erstreckt, angeordnet ist.

15. Gestängevorrichtung (433) nach den Ansprüchen 1 oder 9, wobei die bogenförmige Außenfläche (427) durch eine Mehrzahl von Krümmungsradien definiert wird,
wobei die Mehrzahl von Krümmungsradien umfasst: einen ersten kugeligen Außenflächenabschnitt (427A), der sich über einen ersten Bogen (Q1) hinweg erstreckt, wobei der erste Bogen (Q1) sich zwischen einer ersten Ebene (LA) und einer vierten Ebene (LD) erstreckt; einen zweiten kugeligen Außenflächenabschnitt (427B), der sich über einen zweiten Bogen (Q2) hinweg erstreckt, wobei der zweite Bogen (Q2) sich zwischen einer zweiten Ebene (LB) und einer dritten Ebene (LC) erstreckt; einen dritten kugeligen Außenflächenabschnitt (427C), der sich über einen dritten Bogen (Q3) hinweg erstreckt, wobei der dritte Bogen (Q3) sich zwischen der dritten Ebene (LC) und der vierten Ebene (LD) erstreckt, und einen vierten kugeligen Außenflächenabschnitt (427D), der sich über einen vierten Bogen (Q4) hinweg erstreckt, wobei der vierte Bogen (Q4) sich zwischen der ersten Ebene (LA) und der zweiten Ebene (LB) erstreckt.

16. Gestängevorrichtung (433) nach Anspruch 16, wobei der erste kugelige Außenflächenabschnitt (427A) und der zweite kugelige Außenflächenabschnitt (427B) über einen vierten kugeligen Außenflächenabschnitt (427D) an der ersten Ebene (LA) und der zweiten Ebene (LB) ineinander übergehen.

17. Gestängevorrichtung (433) nach Anspruch 17, wobei jeder kugelige Außenflächenabschnitt (427A, 427B, 427C, 427D) einen anderen Krümmungsradius definiert als ein benachbarter kugeliger Außenflächenabschnitt.

**Revendications**

1. Appareil de couplage (433) pour l'actionnement d'un dispositif de positionnement, l'appareil de couplage (433) comprenant :

   un élément de pivot (426) ayant une partie de tête (428) configurée pour recevoir par déformation plastique un ensemble de palier (10) en son sein, la partie de tête (428) définissant un alésage (429) en son sein ayant une surface intérieure sensiblement cylindrique (429A) qui définit un diamètre intérieur (D2) ayant un premier point central (X1), la partie de tête (428) définissant en outre une surface extérieure arquée tronquée (427), une partie (427A) de la surface extérieure arquée tronquée (427) définit un rayon de courbure et un deuxième point central (X2) ;
   une tige (430) ayant un axe central (A2), la tige (430) s'étendant depuis l'élément de pivot (426) le long de l'axe central (A2) dans une première direction ; et
   le deuxième point central (X2) est décalé par rapport au premier point central (X1) dans la première direction et une distance (D3) entre le premier point central (X1) et le deuxième point central (X2), mesurée le long de l'axe central (A2), représente jusqu'à environ 33% du rayon de courbure.

2. Appareil de couplage (433) selon la revendication 1, dans lequel la distance entre le premier point central (X1) et le deuxième point central (X2) est d'environ 5 % à environ 25 % du rayon de courbure.

3. Appareil de couplage (433) selon la revendication 1, dans lequel l'appareil de couplage (433) est fabriqué à partir d'un alliage d'acier inoxydable martensitique à précipitation/durcissement par vieillissement.

4. Appareil de couplage (433) selon la revendication 1, dans lequel l'appareil de couplage (433) est fabriqué à partir de PH 13-8.

5. Appareil de couplage (433) selon la revendication 1, dans lequel l'appareil de couplage (433) est configuré pour fonctionner avec un système de prélèvement d'air par ventilateur de moteur à double flux.

6. Appareil de couplage (433) selon la revendication 5, dans lequel l'appareil de couplage (433) est configuré pour pouvoir fonctionner avec un ensemble d'actionneur d'aube à dérivation variable.

7. Appareil de couplage (433) selon la revendication 1, comprenant en outre la partie de tête (428) déformée plastiquement autour d'un ensemble de palier (10).

8. Appareil de couplage (433) selon la revendication 7, dans lequel l'ensemble de palier (10) comprend :

   un élément intérieur (12) ayant une surface de mise en prise extérieure (23) et un alésage (16) s'étendant au moins à mi-chemin à travers celui-ci ;
   un élément extérieur (14) positionné au moins partiellement autour de l'élément intérieur (12), l'élément extérieur (14) ayant une surface de mise en prise intérieure (18) profilée à une forme complémentaire à la surface de mise en prise extérieure (23) de l'élément intérieur (12) ; et
   une garniture autolubrifiante (20) disposée entre la surface de mise en prise intérieure (18) de l'élément extérieur (14) et la surface de mise en prise extérieur (23) de l'élément intérieur (12).

9. Appareil de couplage (433) pour l'actionnement d'un dispositif de positionnement, l'appareil de couplage (433) comprenant :

un élément de positionnement (432) définissant une première extrémité (432A), une seconde extrémité (432B) et un axe central (A2) à travers celui-ci ;

un élément de pivot (426) défini au niveau de la première extrémité (432a) de l'élément de positionnement (432) et ayant une partie de tête (428) configurée pour recevoir par déformation plastique un ensemble de palier (10) en son sein, la partie de tête (428) définissant un alésage (429) en son sein ayant une surface intérieure sensiblement cylindrique (429A) qui définit un diamètre intérieur (D2) ayant un premier point central (X1), la partie de tête (428) définissant en outre une surface extérieure arquée tronquée (427), une partie de la surface extérieure arquée tronquée (427A) définit un rayon de courbure et un deuxième point central (X2) ;

une tige (432) s'étendant depuis l'élément de pivot (426) le long de l'axe central (A2) de l'élément de positionnement (432) dans une première direction,

un élément de couplage (434) défini au niveau de la deuxième extrémité (432B) de l'élément de positionnement (432) pour coupler l'élément de positionnement (432) à un élément structurel (29) ; et

le deuxième point central (X2) est décalé du premier point central (X1) dans la première direction et une distance entre le premier point central (X1) et le deuxième point central (X2), mesurée le long de l'axe central (A2), est dans la plage allant jusqu'à environ 33 % du rayon de courbure.

10. Appareil de couplage (433) selon la revendication 9, dans lequel l'appareil de couplage (433) est fabriqué à partir de PH 13-8.

11. Appareil de couplage (433) selon la revendication 9, comprenant en outre la partie de tête (428) déformée plastiquement autour d'un ensemble de palier (10).

12. Appareil de couplage (433) selon la revendication 9, dans lequel l'ensemble de palier (10) comprend :

un élément intérieur (12) ayant une surface de mise en prise extérieure (23) et un alésage (16) s'étendant au moins à mi-chemin à travers celui-ci ;

un élément extérieur (14) positionné au moins partiellement autour de l'élément intérieur (12), l'élément extérieur (14) ayant une surface de mise en prise intérieure (18) profilée à une forme complémentaire à la surface de mise en prise extérieure (23) de l'élément intérieur (12) ; et

une garniture autolubrifiante (20) disposée entre la surface de mise en prise intérieure (18) de l'élément extérieur (14) et la surface de mise en prise extérieure (23) de l'élément intérieur (12).

13. Appareil de couplage (433) selon la revendication 7, dans lequel l'ensemble de palier (10) comprend :

un élément intérieur (12) ayant une surface de mise en prise extérieure (23) et un alésage (16) s'étendant au moins à mi-chemin à travers celui-ci ;

un élément extérieur (14) positionné au moins partiellement autour de l'élément intérieur (12), l'élément extérieur (14) ayant une surface de mise en prise intérieur (18) profilée à une forme complémentaire à la surface de mise en prise extérieur (23) de l'élément intérieur (12) ; et

une garniture autolubrifiante (20) disposée entre une surface intérieure (17) de l'alésage (16) de l'élément intérieur (12) et un arbre (11) s'étendant au moins partiellement à travers celui-ci.

14. Appareil de couplage (433) selon la revendication 8, dans lequel l'ensemble de palier (20) comprend en outre :
une garniture autolubrifiante (20) disposée entre une surface intérieure (17) de l'alésage (16) de l'élément intérieur (12) et un arbre (11) s'étendant au moins partiellement à travers celui-ci.

15. Appareil de couplage (433) selon les revendications 1 ou 9, dans lequel la surface extérieure arquée (427) est définie par une pluralité de rayons de courbure,
dans lequel la pluralité de rayons de courbure comprend une première section de surface extérieure sphérique (427A) s'étendant à travers un premier arc (Q1), le premier arc (Q1) s'étendant entre un premier plan (LA) et un quatrième plan (LD) ; une deuxième section de surface extérieure sphérique (427B) s'étendant à travers un deuxième arc (Q2), le deuxième arc (Q2) s'étendant entre un deuxième plan (LB) et un troisième plan (LC) ; une troisième section de surface extérieure sphérique (427C) s'étendant à travers un troisième arc (Q3), le troisième arc (Q3) s'étendant entre le troisième plan (LC) et le quatrième plan (LD), et une quatrième section de surface extérieure sphérique (427D) s'étendant sur un quatrième arc (Q4), le quatrième arc (Q4) s'étendant entre le premier plan (LA) et le deuxième plan (LB).

16. Appareil de couplage (433) selon la revendication 15, dans lequel la première section de surface extérieure sphérique (427A) et la deuxième section de surface extérieure sphérique (427B) sont mélangées par une quatrième section de surface extérieure sphérique (427D) au niveau du premier plan (LA) et du deuxième plan (LB).

17. Appareil de couplage (433) selon la revendication 16 dans lequel chaque section de surface extérieure sphérique (427A, 427B, 427C, 427D) définit un rayon de courbure différent de celui d'une section de surface extérieure sphérique adjacente.

# FIG. 1A

# FIG. 1B

# FIG. 1C

# FIG. 1D

# FIG. 2

# FIG. 3A

# FIG. 3B

# FIG. 3C

# FIG. 3D

# FIG. 3E

# FIG. 4

FIG. 5

# FIG. 6

# FIG. 7A

EP 2 964 968 B1

# FIG. 7B

# FIG. 7C

# FIG. 8

| | 21377 |
|---|---|
| Location: | -0.714,0.0318,0.119 in |
| | 197,129.8 psi |

| Node:2 | 1448 |
|---|---|
| X,Y Location: | -0.658,0,0.104 in |
| Value: | 201,982.3 psi |

| Node:3 | 21371 |
|---|---|
| X,Y, Z Location: | -0.69,0.0317,0.222 in |
| Value: | 194,866.4 psi |

| Node:4 | 23307 |
|---|---|
| X,Y, Z Location: | -0.658,0.0317,0.252 in |
| Value: | 188,039.1 psi |

| Node:5 | 23529 |
|---|---|
| X,Y, Z Location: | -0.614,0.0556,0.23 in |
| Value: | 187,059.3 psi |

| Node: 6 | 22740 |
|---|---|
| X,Y, Z Location: | 0.193,0.562,0.104 in |
| Value: | 300,670.6 psi |

| Node: 7 | 23189 |
|---|---|
| X,Y, Z Location: | 0.189,0.686,0.23 in |
| Value: | 245,961.8 psi |

| Node: 8 | 22483 |
|---|---|
| X,Y, Z Location: | 0.22,0.643,0.252 in |
| Value: | 107,694.4 psi |

| Node: 9 | 166 |
|---|---|
| X,Y, Z Location: | 0.255,0.675,0.252 in |
| Value: | 32,603.2 psi |

EP 2 964 968 B1

# FIG. 9

| Node: 10 | 24436 |
| X,Y, Z location: | 1.1,0.293,0.0501 in |
| Value: | 278,228.6 psi |

EP 2 964 968 B1

# FIG. 10

FIG. 11A

FIG. 11B

FIG. 11C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3256007 A
- FR 2878588

- FR 2923460